# EUROPEAN PATENT APPLICATION

(11) **EP 4 287 307 A1**
(43) Date of publication of application: **06.12.2023**
(21) Application number: 21923043.0
(22) Date of filing: 21.10.2021
(51) Int. Cl.: H01M 4/134, H01M 4/38, H01M 4/66, H01M 10/052

(54) **BATTERY**

(30) Priority: 26.01.2021 JP 2021010650
(71) Applicant: Panasonic Intellectual Property Management Co., Ltd., Osaka 571-0057 (JP)
(72) Inventor: FUJIMOTO Masahisa, Kadoma-shi, Osaka 571-0057 (JP); OTO Takashi, Kadoma-shi, Osaka 571-0057 (JP)
(74) Representative: Novagraaf International SA
(86) International application number: PCT/JP2021/038853
(87) International publication number: WO 2022/163037

(57) **Abstract**

Provided is a battery including: a first electrode; a second electrode; and an electrolyte layer located between the first electrode and the second electrode, wherein the first electrode includes: a current collector; and an active material layer located between the current collector and the electrolyte layer, the active material layer contains Bi as a main component of an active material, and the active material has a density of from 6.0 g/cm³ to 9.8 g/cm³, inclusive.

## Description

### TECHNICAL FIELD

The present disclosure relates to a battery.

### BACKGROUND ART

In recent years, in lithium secondary batteries which have been actively researched and developed, battery characteristics such as charge-discharge voltage, charge-discharge cycle life characteristics, and storage characteristics largely depend on an electrode to be used. Thus, an attempt to improve the battery characteristics has been made by improving the electrode active material.

For example, lithium secondary batteries produced by using, as an electrode, aluminum, silicon, tin, or the like which is electrochemically alloyed with lithium during charging have been proposed for a long time. PTL 1 discloses a lithium secondary battery including: a negative electrode containing a negative electrode material including an alloy containing silicon, tin and a transition metal; a positive electrode; and an electrolyte. PTL 2 discloses a lithium secondary battery including: a negative electrode produced by using a silicon thin film provided on a current collector as an active material; a positive electrode; and an electrolyte.

### Citation List

### Patent Literature

PTL 1: Japanese Patent Publication No. 4898737
PTL 2: Japanese Patent Publication No. 3733065

### SUMMARY OF THE INVENTION

### Technical problem

The present disclosure provides a battery having good cycle characteristics. Solution to problem

A battery of the present disclosure includes: a first electrode; a second electrode; and an electrolyte layer located between the first electrode and the second electrode, wherein the first electrode includes: a current collector; and an active material layer located between the current collector and the electrolyte layer, the active material layer contains Bi as a main component of an active material, the active material has a density of from 6.0 g/cm³ to 9.8 g/cm³ inclusive, and wherein when the first electrode is a negative electrode, the density of the active material is a density of the active material of the battery in a fully discharged state, and when the first electrode is a positive electrode, the density of the active material is a density of the active material of the battery in a fully charged state. Advantageous effect of invention

According to the present disclosure, a battery having good cycle characteristics can be provided.

### BRIEF DESCRIPTION OF THE DRAWINGS

Fig. 1 is a cross-sectional view schematically illustrating a configuration example of battery 1000 according to an exemplary embodiment of the present disclosure.
Fig. 2 is a graph showing a relationship between the thickness of an active material layer formed of a Bi plating layer and the density of an active material.
Fig. 3 is a graph showing an example of X-ray diffraction patterns of active material layers formed of a Bi plating layer prepared on a copper foil, and a Bi powder.
Fig. 4 is a cross-sectional view schematically illustrating a modified example of the battery according to the exemplary embodiment of the present disclosure.
Fig. 5 is a graph showing a result of an initial charge-discharge test of a battery according to Example 1.
Fig. 6 is a graph showing a result of a charge-discharge test of the battery according to Example 1 at the second cycle.
Fig. 7 is a graph showing a relationship between the number of cycles and the discharge capacity density of the battery according to Example 1.
Fig. 8 is a graph showing a relationship between the number of cycles and the charge-discharge efficiency of the battery according to Example 1.
Fig. 9 is a graph showing a result of an initial charge-discharge test of a battery according to Comparative Example 1.
Fig. 10 is a graph showing a relationship between the number of cycles and the discharge capacity density of batteries according to Comparative Examples 1 and 2.
Fig. 11 is a graph showing a result of an initial charge-discharge test of a battery according to Comparative Example 2.

### DESCRIPTION OF EMBODIMENT

### (Knowledge underlying the present disclosure)

As described in the section of [BACKGROUND ART], in the lithium secondary battery, an attempt to improve battery characteristics has been made by improving the electrode active material.

When lithium metal is used as the negative electrode active material, a lithium secondary battery having high energy density per weight and volume is obtained. However, in the lithium secondary battery having such a configuration, lithium is deposited in a dendrite shape during charging. Since a part of the deposited lithium metal reacts with the electrolytic solution, there is a problem that charge-discharge efficiency is low and cycle characteristics are poor.

To address the problem, use of carbon, particularly, used of graphite as the negative electrode has been proposed. In the negative electrode including carbon, charging and discharging are performed by insertion and desorption of lithium into and from carbon. In the negative electrode having such a configuration, lithium metal is not deposited in a dendrite shape due to the charge-discharge mechanism. In addition, the lithium secondary battery, which employs the negative electrode having such a configuration, involves a topotactic reaction and thus has very good reversibility, and exhibits almost 100% of charge-discharge efficiency. For these reasons, a lithium secondary battery employing a negative electrode including carbon, particularly graphite, has been put into practical use. However, the theoretical capacity density of graphite is 372 mAh/g, which is about 1/10 of the theoretical capacity density of lithium metal of 3,884 mAh/g. Therefore, the capacity density of the active material of the negative electrode including graphite is low. Further, since the actual capacity density of graphite has reached almost the theoretical capacity density, an increase in capacity of the negative electrode including graphite has reached a limit.

On the other hand, lithium secondary batteries produced by using, as an electrode, aluminum, silicon, tin, or the like which is electrochemically alloyed with lithium during charging have been proposed for a long time. The capacity density of the metal to be alloyed with lithium is much larger than the capacity density of graphite. In particular, the theoretical capacity density of silicon is large. Therefore, an electrode produced by using aluminum, silicon, tin, or the like to be alloyed with lithium is promising as a negative electrode for a battery exhibiting high capacity, and various secondary batteries including such an electrode as a negative electrode have been proposed (PTL 1).

However, the negative electrode produced by using a metal to be alloyed with lithium as described above expands when absorbing lithium and contracts when releasing lithium. When such expansion and contraction are repeated in charging and discharging, the alloy itself as an electrode active material is pulverized due to charging and discharging, and the current collecting characteristics of the negative electrode are deteriorated. As a result, sufficient cycle characteristics are not obtained. In order to remedy such drawbacks, the following several attempts have been made. For example, attempts have been made to deposit silicon on a current collector having a roughened surface by sputtering or vapor deposition, or to deposit tin on the current collector by electroplating (PTL 2). In this attempt, the active material, that is, the metal to be alloyed with lithium becomes a thin film and is in close contact with the current collector. Therefore, even when the negative electrode repeatedly expands and contracts due to absorption and release of lithium, the current collecting property is hardly deteriorated.

However, when a layer of the active material is formed by sputtering or vapor deposition as described above, the production cost is high, which is not practical. It is practical to form a layer of an active material by electroplating at low production cost, but it is very difficult to perform electroplating with silicon. In addition, tin with which electroplating is easily performed has a problem of having poor discharge flatness, and thus is difficult to use as an electrode of a battery.

As the metal to be alloyed with lithium, bismuth (Bi) is also exemplified. Bi constitutes, together with lithium (Li), compounds of LiBi and Li₃Bi. There is almost no difference between the potential of LiBi and the potential of Li₃Bi. On the other hand, there are several compounds constituted of tin having poor discharge flatness and lithium, and the potentials of such compounds are considerably different from each other. That is, Bi does not have a property like tin that the potential is greatly different among a plurality of types of compounds formed by combination with lithium. For this reason, an electrode containing Bi as an active material has a flat potential and thus is excellent in discharge flatness. Therefore, an electrode containing Bi as an active material is considered to be suitable as an electrode of a battery.

In view of the above, the present inventors have focused on an electrode containing Bi as an active material, and have conducted studies.

Bi, which is poor in malleability and ductility, cannot be produced in the form of a metal plate or a metal foil, and the obtainable form is a small ball or a powder. Therefore, an electrode, in which a Bi powder is applied onto a current collector, has been conventionally studied as an electrode containing Bi as an active material.

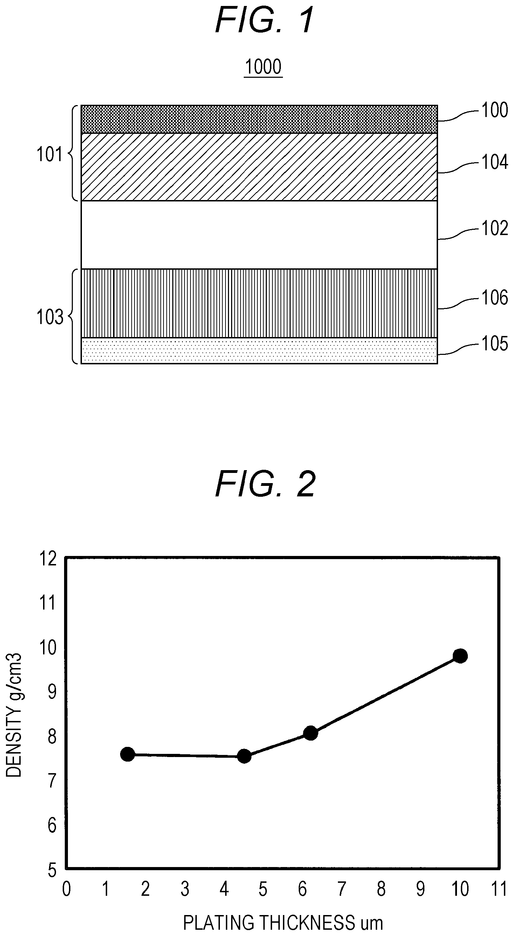

However, it has been reported that, in an electrode formed by applying a metal powder onto a current collector, the metal powder is pulverized due to charging and discharging, and current collecting characteristics are deteriorated, so that sufficient cycle characteristics cannot be obtained. For example, "Amorphous Polymeric Anode Materials from Poly(acrylic acid) and Metal Oxide for Lithium Ion Batteries" (Graduate school of Engineering, Mie University, PhD thesis, 2014) written by Hiroyuki Yamaguchi, Mie University, describes the cycle characteristics of a Bi powder electrode produced by using polyvinylidene fluoride (PVdF) or polyimide (PI) as a binder (see, page 20, Fig. 2.2). The above article states that the cycle characteristics of the Bi powder electrode are insufficient. The article states that the reason for this is the following. As the Bi active material expands at the time of Li insertion during charging, and contracts at the time of Li desorption during discharging, the active material becomes finer. As a result, an electron conduction path cannot be secured, leading to decrease in the capacity.

Therefore, the present inventors have conducted intensive studies in order to solve the above-described problems of the electrode containing Bi as an active material, and to obtain a battery having good cycle characteristics. As a result, the present inventors have completed the battery of the present disclosure shown below.

### (Overview of one aspect according to the present disclosure)

A battery according to a first aspect of the present disclosure includes: a first electrode; a second electrode; and an electrolyte layer located between the first electrode and the second electrode, wherein the first electrode includes: a current collector; and an active material layer located between the current collector and the electrolyte layer, the active material layer contains Bi as a main component of an active material, the active material has a density of from 6.0 g/cm³ to 9.8 g/cm³ inclusive, and wherein when the first electrode is a negative electrode, the density of the active material is a density of the active material of the battery in a fully discharged state, and when the first electrode is a positive electrode, the density of the active material is a density of the active material of the battery in a fully charged state.

The active material layer of the first electrode in the battery according to the first aspect contains Bi as a main component of the active material, and the active material has a density of from 6.0 g/cm³ to 9.8 g/cm³ inclusive. The current collecting property of the active material layer having such a configuration is hardly deteriorated, even when the active material layer repeatedly expands and contracts due to charging and discharging. Therefore, the battery according to the first aspect has good cycle characteristics. Further, the first electrode including the active material layer having such a configuration can be said to be an electrode having a high active material density. Therefore, the battery according to the first aspect can realize high capacity in addition to good cycle characteristics.

In a second aspect of the present disclosure, for example, in the battery according to the first aspect, the density of the active material may be from 7.5 g/cm³ to 9.8 g/cm³ inclusive.

The battery according to the second aspect has high capacity and good cycle characteristics.

In a third aspect of the present disclosure, for example, in the battery according to the first or second aspect, in an X-ray diffraction pattern of the active material layer, obtained by surface X-ray diffraction measurement using a Cu-Kα ray, an intensity ratio I(2)/I(1) of an intensity I(2) to an intensity I(1) may be more than or equal to 0.29, where the intensity I(1) is a height intensity of a maximum peak present in a range of a diffraction angle 2θ of from 26° to 28° inclusive, and the intensity I(2) is a height intensity of a maximum peak present in a range of a diffraction angle 2θ of from 37° to 39° inclusive.

The battery according to the third aspect has a higher capacity and good cycle characteristics.

In a fourth aspect of the present disclosure, for example, in the battery according to the third aspect, the intensity ratio I(2)/I(1) may be less than or equal to 0.57.

The battery according to the fourth aspect has a higher capacity and good cycle characteristics.

In a fifth aspect of the present disclosure, for example, in the battery according to any one of the first to fourth aspects, the active material layer may contain a Bi simple substance.

The battery according to the fifth aspect has a higher capacity and good cycle characteristics.

In a sixth aspect of the present disclosure, for example, in the battery according to any one of the first to fifth aspects, the active material layer may contain at least one selected from the group consisting of LiBi and Li₃Bi.

The battery according to the sixth aspect has a higher capacity and good cycle characteristics.

In a seventh aspect of the present disclosure, for example, in the battery according to any one of the first to sixth aspects, the active material layer may contain only a Bi simple substance as an active material.

The battery according to the seventh aspect has a higher capacity and good cycle characteristics.

In an eighth aspect of the present disclosure, for example, in the battery according to any one of the first to seventh aspects, the active material layer need not contain an electrolyte.

According to the eighth aspect, a battery having a higher capacity per volume and good cycle characteristics is obtained.

In a ninth aspect of the present disclosure, for example, in the battery according to any one of the first to eighth aspects, the current collector may contain Cu.

The battery according to the ninth aspect has a higher capacity and good cycle characteristics.

In a tenth aspect of the present disclosure, for example, in the battery according to any one of the first to ninth aspects, the active material layer may be a plating layer.

According to the tenth aspect, a battery having a higher capacity per volume and good cycle characteristics is obtained.

In an eleventh aspect of the present disclosure, for example, in the battery according to any one of the first to tenth aspects, the first electrode may be a negative electrode, and the second electrode may be a positive electrode.

The battery according to the eleventh aspect has a higher capacity and good cycle characteristics.

### (Exemplary embodiments of present disclosure)

Hereinafter, exemplary embodiments of the present disclosure will be described with reference to the drawings. The following description is intended to provide a comprehensive or specific example. Numerical values, compositions, shapes, film thicknesses, electrical characteristics, structures of secondary batteries, and the like shown below are merely examples, and are not intended to limit the present disclosure.

Fig. 1 is a cross-sectional view schematically illustrating a configuration example of battery 1000 according to an exemplary embodiment of the present disclosure.

Battery 1000 includes: first electrode 101; second electrode 103; and electrolyte layer 102 located between first electrode 101 and second electrode 103. First electrode 101 includes: current collector 100; and active material layer 104 located between current collector 100 and electrolyte layer 102. Active material layer 104 contains Bi as a main component of the active material. The active material contained in active material layer 104 has a density of from 6.0 g/cm³ to 9.8 g/cm³ inclusive. Second electrode 103 may include: current collector 105; and active material layer 106 located between current collector 105 and electrolyte layer 102.

Battery 1000 is, for example, a lithium secondary battery. Hereinafter, a case where battery 1000 is a lithium secondary battery, and metal ions occluded and released in active material layer 104 of first electrode 101 and second electrode 103 during charging and discharging are lithium ions will be described as an example.

The phrase "active material layer 104 contains Bi as a main component of the active material" means that "in active material layer 104, a component contained in the largest amount as an active material in terms of molar ratio is Bi".

In the present specification, when first electrode 101 is a negative electrode, the density of the active material contained in active material layer 104 of first electrode 101 is a density of the active material contained in active material layer 104 of battery 1000 in a fully discharged state, and when first electrode 101 is a positive electrode, the density of the active material contained in active material layer 104 of first electrode 101 is a density of the active material contained in active material layer 104 of battery 1000 in a fully charged state. That is, the density of the active material contained in active material layer 104 of first electrode 101 specified in the present specification is a density of the active material contained in active material layer 104 in a state in which lithium ions are released from active material layer 104 by full charging or full discharging. Here, the expression "fully charged state" in the battery of the present disclosure refers to a state in which the battery is charged up to a predetermined voltage (for example, the negative electrode potential is 0 V on a lithium reference electrode basis) at a constant current (for example, 0.05 C relative to the theoretical capacity). The expression "fully discharged state" in the battery of the present disclosure refers to a state in which the battery is discharged up to a predetermined voltage (for example, the negative electrode potential is 2 V on a lithium reference electrode basis) at a constant current (for example, 0.05 C relative to the theoretical capacity). The density of the active material contained in active material layer 104 can be obtained, for example, by extracting the active material from active material layer 104, and calculating the density of the extracted active material by, for example, the Archimedes method. As an example, in a case where active material layer 104 is formed of a thin film substantially made of an active material, at least a part of the thin film is extracted as a sample, and the density of the sample is calculated by, for example, the Archimedes method, thereby obtaining the density of the active material. Here, the thin film substantially made of an active material means a thin film in which the content of the active material in the thin film is more than or equal to 90 mass%.

Active material layer 104 in which the main component of the active material is Bi and the density of the active material is from 6.0 g/cm³ to 9.8 g/cm³ inclusive can be formed of, for example, Bi formed in a thin film shape (hereinafter, referred to as "Bi thin film"). When active material layer 104 formed of a high-density Bi thin film satisfying the above density range is provided in contact with current collector 100, active material layer 104 can have high adhesion to current collector 100. According to this configuration, the active material, that is, Bi, which is a metal to be alloyed with lithium, in the form of a thin film is in close contact with current collector 100. Therefore, the electron conduction path can be maintained even when Bi repeatedly expands and contracts due to occlusion and release of lithium. Therefore, in first electrode 101 in the present disclosure, even when active material layer 104 repeatedly expands and contracts due to occlusion and release of Li, deterioration of current collecting property hardly occurs. Battery 1000 of the present disclosure can have good cycle characteristics accordingly.

In addition, active material layer 104 formed of the Bi thin film satisfying the above density range is an active material layer having a high active material density, and can secure a sufficient electron conduction path. Therefore, first electrode 101 including active material layer 104 formed of the Bi thin film can realize a higher capacity than an electrode including an active material layer formed of a Bi powder. Therefore, battery 1000 of the present disclosure can realize high capacity in addition to good cycle characteristics.

The density of the active material contained in active material layer 104 may be from 6.5 g/cm³ to 9.8 g/cm³ inclusive, or may be from 7.0 g/cm³ to 9.8 g/cm³ inclusive. When first electrode 101 includes active material layer 104 containing such a denser active material, battery 1000 can have better cycle characteristics and a higher capacity.

The density of the active material contained in active material layer 104 may be from 7.5 g/cm³ to 9.8 g/cm³ inclusive. In particular, first electrode 101 including active material layer 104 containing an active material having a high density of more than or equal to 7.5 g/cm³ can further improve the cycle characteristics and capacity of battery 1000.

In an X-ray diffraction pattern of active material layer 104, obtained by surface X-ray diffraction measurement using Cu-Kα rays, an intensity ratio I(2)/I(1) of an intensity I(2) to an intensity I(1) may be more than or equal to 0.29, where the intensity I(1) is a height intensity of a maximum peak present in a range of a diffraction angle 2θ of from 26° to 28° inclusive, and the intensity I(2) is a height intensity of a maximum peak present in a range of a diffraction angle 2θ of from 37° to 39° inclusive.

Here, the maximum peak present in a range of a diffraction angle 2θ of from 26° to 28° inclusive in the X-ray diffraction pattern corresponds to a peak derived from the (1,0,-1,2) plane of a Bi simple substance. The maximum peak present in a range of a diffraction angle 2θ of from 37° to 39° inclusive in the X-ray diffraction pattern corresponds to a peak derived from the (1,0,-1,4) plane of a Bi simple substance. The peak intensity ratio I(2)/I(1) of more than or equal to 0.29 means that the proportion of the (1,0,-1,4) plane relative to the plane (1,0,-1,2) in the Bi simple substance having a trigonal crystal structure belonging to the space group R-3m is high on the surface of active material layer 104. That is, the peak intensity ratio I(2)/I(1) of more than or equal to 0.29 means that the orientation of the (1,0,-1,4) plane is stronger on the surface of active material layer 104. Active material layer 104 having such orientation in a crystal structure of a Bi simple substance on the surface thereof can have high adhesion to current collector 100. Therefore, since active material layer 104 has such surface orientation, deterioration of the current collecting property hardly occurs even when active material layer 104 repeatedly expands and contracts due to charge and discharge. Accordingly, battery 1000 of the present disclosure can have better cycle characteristics and a higher capacity.

The peak intensity ratio I(2)/I(1) may be less than or equal to 0.57.

According to the above configuration, better charge-discharge cycle characteristics can be obtained.

The X-ray diffraction pattern of active material layer 104 can be obtained by X-ray diffraction measurement by the θ-2θ method using Cu-Kα rays having wavelengths of 1.5405 Å and 1.5444 Å, that is, wavelengths of 0.15405 nm and 0.15444 nm.

The diffraction angle of the peak in the X-ray diffraction pattern is defined as an angle indicating the maximum intensity of the protrusion portion at which the value of the SN ratio (that is, the ratio of the signal S to the background noise N) is more than or equal to 1.3 and the full width at half maximum is less than or equal to 10°. The full width at half maximum is a width represented by a difference between two diffraction angles, and a width at which the intensity of the X-ray diffraction peak is a half value of I_{MAX}, assuming that the maximum intensity of the X-ray diffraction peak is I_{MAX}.

Active material layer 104 which contains Bi as a main component of the active material and is formed of a Bi thin film satisfying the above density range and surface orientation can be prepared by, for example, electroplating. A method for producing first electrode 101 by preparing active material layer 104 by electroplating is, for example, as follows.

First, a base material for electroplating is prepared. In first electrode 101, for example, current collector 100 serves as a base material. As an example, a copper foil is prepared as current collector 100. The copper foil is preliminarily degreased with an organic solvent, and then one surface of the foil is masked. The foil is immersed in an acidic solvent to perform degreasing, thereby activating the surface of the copper foil. The activated copper foil is connected to a power source so that a current can be applied thereto. The copper foil connected to the power source is immersed in a bismuth plating bath. As the bismuth plating bath, for example, an organic acid bath containing Bi³⁺ ions and an organic acid is used. Thereafter, the unmasked part of the copper foil surface is electroplated with Bi by applying a current to the copper foil under the control of the current density and the application time. After the electroplating, the copper foil is recovered from the plating bath, the masking is removed from the copper foil, and the copper foil is washed with pure water and dried. By these methods, first electrode 101 including active material layer 104 prepared by Bi electroplating is obtained. Note that the bismuth plating bath used for preparing active material layer 104 is not particularly limited, and can be appropriately selected from known bismuth plating baths capable of depositing a Bi simple substance thin film. In the bismuth plating bath, an organic sulfonic acid bath, a gluconic acid and ethylenediaminetetraacetic acid (EDTA) bath, or a citric acid and EDTA bath can be used as the organic acid bath. For example, a sulfuric acid bath may be used as the bismuth plating bath. An additive may be added to the bismuth plating bath.

Here, the relationship between the thickness of the active material layer prepared by Bi electroplating and the density of the active material is confirmed. Hereinafter, active material layer 104 prepared by Bi electroplating may be described as an "active material layer formed of a Bi plating layer".

Fig. 2 is a graph showing a relationship between the thickness of an active material layer formed of a Bi plating layer and the density of an active material. The density of the active material in this case is determined by determining the density of the active material layer formed of a Bi plating layer. A sample of the active material layer formed of a Bi plating layer was prepared in the same manner as in Example 1, which will be described later. The application time of the current to the copper foil as a plating base material was adjusted aiming at plating thicknesses of 1 µm, 3 µm, 5 µm, and 10 µm, thereby preparing four samples of active material layers. The relationship between the thickness of the active material layer and the density of the active material was determined from the mass, area, and thickness of the active material layer. The thickness of the resulting Bi plating layer was measured with an X-ray fluorescence spectrometer (SEA6000VX, manufactured by Seiko Instruments Inc.). The thicknesses of the active material layers in the four samples were 1.5 µm, 4.5 µm, 6.2 µm, and 10 µm. As shown in the graph of Fig. 2, it can be seen that when the active material layer is a Bi plating layer, the density of the active material is 7.5 g/cm³ to 9.8 g/cm³.

In addition, the structure of the surface of the active material layer formed of a Bi plating layer was also analyzed by surface X-ray diffraction measurement. The sample of the active material layer formed of a Bi plating layer used for the surface X-ray diffraction measurement was prepared by the same method as the sample used for confirming the relationship between the thickness of the active material layer and the density of the active material. For comparison, X-ray diffraction measurement for the Bi powder was also performed.

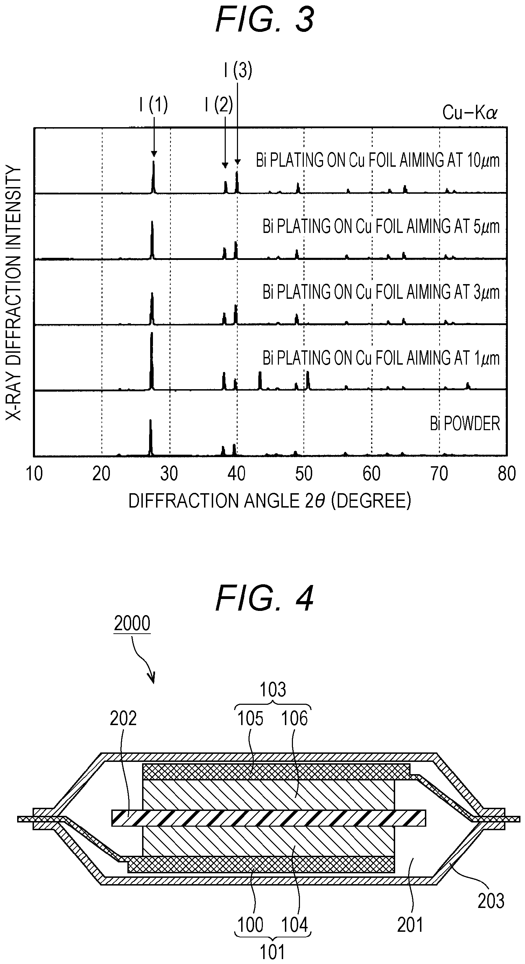

Fig. 3 is a graph showing an example of X-ray diffraction patterns of active material layers formed of a Bi plating layer prepared on a copper foil, and a Bi powder. The X-ray diffraction pattern is measured by the θ-2θ method using Cu-Kα rays having wavelengths of 1.5405 Å and 1.5444 Å as X-rays from the surface of the Bi plating layer, that is, the thickness direction of active material layer 104, using an X-ray diffractometer (MiNi Flex, manufactured by Rigaku Corporation).

Table 1 shows calculation results of the intensity ratio I(2)/I(1) between a height intensity I(1) of a maximum peak present in a range of a diffraction angle 2θ of from 26° to 28° inclusive and a height intensity I(2) of a maximum peak present in a range of a diffraction angle 2θ of from 37° to 39° inclusive, in the X-ray diffraction patterns of Bi plating layers and a Bi powder, obtained by surface X-ray diffraction measurement using Cu-Kα rays. Table 1 shows measurement results of the Bi plating layers of various thicknesses and three times measurement results of the Bi powder.

**[Table 1]**

| State | | Peak intensity | | Peak intensity ratio |
|---|---|---|---|---|
| Plating | Aimed thickness t um | I(1) | I(2) | I(2)/I(1) |
| | 10 | 28965 | 10403 | 0.36 |
| | 5 | 34320 | 10025 | 0.29 |
| | 5 | 9224 | 5289 | 0.57 |
| | 3 | 28906 | 10121 | 0.35 |
| | 1 | 49879 | 20071 | 0.40 |
| | 1 | 52667 | 16010 | 0.30 |
| Powder | N | I(1) | I(2) | I(2)/I(1) |
| | 1 | 30787 | 4922 | 0.16 |
| | 2 | 34213 | 9139 | 0.27 |
| | 3 | 30787 | 4922 | 0.16 |

Table 1 shows that the ratio I(2)/I(1) is more than or equal to 0.29 in active material layer 104 prepared by Bi electroplating. Table 1 shows that, on the surface of active material layer 104 prepared by Bi electroplating, the ratio of the (1,0,-1,4) plane to the (1,0,-1,2) plane of a Bi simple substance having a trigonal crystal structure belonging to the space group R-3m is high. That is, the orientation of the (1,0,-1,4) plane is stronger on the surface of active material layer 104. When the Bi plating layers and the Bi powder are compared with each other in the X-ray diffraction patterns shown in Fig. 3, the peak intensity I(3) around the diffraction angle 2θ = 40° is large in the Bi plating layers having a thickness of more than or equal to 3 µm. This result reveals that the Bi plating layer has orientation such that the (2,-1,-1,0) plane of a Bi simple substance having a trigonal crystal structure belonging to the space group R-3m is a surface. It is considered that the difference in the X-ray diffraction pattern due to orientation between the Bi plating layer having a thickness of less than 3 µm and the Bi powder has not been sufficiently confirmed due to the influence of the surface roughness of the copper foil as a base material, or the like.

Hereinafter, each configuration of battery 1000 of the present exemplary embodiment will be described in more detail by exemplifying a case where first electrode 101 is a negative electrode and second electrode 103 is a positive electrode.

### [First electrode]

As described above, first electrode 101 includes current collector 100 and active material layer 104. The configuration of active material layer 104 is as described above. First electrode 101 functions as a negative electrode. Therefore, active material layer 104 contains a negative electrode active material having a property of occluding and releasing lithium ions. Bi contained in active material layer 104 functions as a negative electrode active material. Active material layer 104 contains, for example, a Bi simple substance.

Bi is an active material that occlude and releases lithium ions at 0.8 V with respect to lithium. Bi is a metal that is alloyed with lithium. Bi forms an alloy with lithium during charging, to thereby occlude lithium therein. That is, in first electrode 101, a lithium bismuth alloy is produced during charging of battery 1000. The lithium bismuth alloy to be produced contains, for example, at least one selected from the group consisting of LiBi and Li₃Bi. That is, during charging of battery 1000, active material layer 104 contains, for example, at least one selected from the group consisting of LiBi and Li₃Bi. During discharging of battery 1000, lithium is released from the lithium bismuth alloy, and the lithium bismuth alloy returns to Bi.

Active material layer 104 may contain only a Bi simple substance as an active material.

Active material layer 104 need not contain an electrolyte. For example, active material layer 104 may be a layer containing a Bi simple substance and/or a lithium bismuth alloy produced during charging.

Active material layer 104 may be disposed in direct contact with the surface of current collector 100.

Active material layer 104 may have a thin film shape.

Active material layer 104, active material layer 104 may be a plating layer formed by depositing Bi by plating. Active material layer 104 may be a Bi plating layer provided in direct contact with the surface of current collector 100.

When active material layer 104 is a plating layer provided in direct contact with the surface of current collector 100, active material layer 104 is in close contact with current collector 100. This makes it possible to suppress deterioration of the current collecting characteristics of first electrode 101, which occurs when active material layer 104 repeatedly expands and contracts. Therefore, the cycle characteristics of battery 1000 are further improved. Further, when active material layer 104 is a plating layer, Bi as an active material is contained in active material layer 104 at a high density, so that a higher capacity can be realized.

Active material layer 104 may contain a material other than Bi.

Active material layer 104 may further contain a conductive material as necessary.

Examples of the conductive material include carbon materials, metals, inorganic compounds, and conductive polymers. Examples of the carbon material include graphite, acetylene black, carbon black, Ketjen black, carbon whisker, needle coke, and carbon fiber. Examples of the graphite include natural graphite and artificial graphite. Examples of the natural graphite include massive graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used singly or in combination of two or more.

Active material layer 104 may further contain a binder as necessary.

Examples of the binder include fluorine-containing resins, thermoplastic resins, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used singly or in combination of two or more.

The thickness of active material layer 104 is not particularly limited, and may be, for example, from 1 µm to 100 µm inclusive.

The material of current collector 100 is, for example, a single metal or alloy. More specifically, the material of current collector 100 may be a single metal or alloy containing at least one selected from the group consisting of copper, chromium, nickel, titanium, platinum, gold, aluminum, tungsten, iron, and molybdenum. Current collector 100 may be stainless steel.

Current collector 100 may contain copper (Cu).

Current collector 100 may have a plate shape or a foil shape. From the viewpoint of easily ensuring high conductivity, the negative electrode current collector may be a metal foil or a metal foil containing copper. Examples of the metal foil containing copper include a copper foil and a copper alloy foil. The content of copper in the metal foil may be more than or equal to 50 mass%, or more than or equal to 80 mass%. In particular, the metal foil may be a copper foil containing substantially only copper as metal. The thickness of current collector 100 may be, for example, from 5 µm to 20 µm inclusive.

Current collector 100 may be a layered film.

### [Electrolyte layer]

Electrolyte layer 102 contains an electrolyte material. The electrolyte material may be a solid electrolyte or an electrolytic solution. Fig. 1 illustrates a configuration example in which electrolyte layer 102 is a solid electrolyte.

When the electrolyte material is a solid electrolyte, a known solid electrolyte used for a lithium secondary battery can be used as the solid electrolyte. For example, a halide solid electrolyte, a sulfide solid electrolyte, an oxide solid electrolyte, a polymer solid electrolyte, or a complex hydride solid electrolyte may be used.

The halide solid electrolyte means a solid electrolyte containing a halogen element. The halide solid electrolyte may contain not only a halogen element but also oxygen. The halide solid electrolyte contains no sulfur (S).

The halide solid electrolyte may be, for example, a material represented by the following compositional formula (1).

Li_{α}M_{β}X_{γ} Formula (1)

Here, α, β, and γ are values larger than 0, M is at least one selected from the group consisting of metal elements other than Li and metalloid elements, and X is at least one selected from the group consisting of F, Cl, Br, and I.

The "metalloid element" is B, Si, Ge, As, Sb, and Te.

The "metal element" refers to all elements included in Groups 1 to 12 of the periodic table except hydrogen, and all elements included in Groups 13 to 16 except B, Si, Ge, As, Sb, Te, C, N, P, O, S, and Se. That is, the metal element is an element group that can be a cation when the element is combined with a halogen compound to form an inorganic compound.

In the compositional formula (1), M may contain Y, and X may contain Cl and Br.

The sulfide solid electrolyte means a solid electrolyte containing sulfur (S). The sulfide solid electrolyte may contain not only sulfur but also a halogen element.

As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used.

As the oxide solid electrolyte, for example, a NASICON-type solid electrolyte typified by LiTi₂(PO₄)₃ and an element-substituted compound thereof, a (LaLi)TiO₃-based perovskite-type solid electrolyte, a LISICON-type solid electrolyte typified by Li₁₄ZnGe₄O₁₆, Li₄SiO₄, LiGeO₄ and an element-substituted compound thereof, a garnet-type solid electrolyte typified by Li₇La₃Zr₂O₁₂ and an element-substituted compound thereof, Li₃PO₄ and an N-substituted compound thereof, and glass or glass ceramics in which Li₂SO₄, Li₂CO₃, or the like is added to a Li-B-O compound as a base such as LiBO₂ and Li₃BO₃ can be used.

As the polymer solid electrolyte, for example, a compound of a polymer compound and a lithium salt can be used. The polymer compound may have an ethylene oxide structure. The polymer compound having an ethylene oxide structure can contain a large amount of lithium salt. Such a polymer compound can further increase the ionic conductivity. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, and the like can be used. One type of lithium salt selected from the exemplified lithium salts can be used singly. Alternatively, a mixture of two or more types of lithium salts selected from the exemplified lithium salts can be used.

As the complex hydride solid electrolyte, for example, LiBH₄-LiI, LiBH₄-P₂S₅, and the like can be used.

When electrolyte layer 102 is a solid electrolyte layer containing a solid electrolyte, electrolyte layer 102 may further contain a binder. As the binder, the same materials as the materials that can be used for active material layer 104 may be used.

The solid electrolyte layer may have a thickness of from 1 µm to 100 µm inclusive. When the solid electrolyte layer has a thickness of more than or equal to 1 µm, first electrode 101 and second electrode 103 are less likely to be short-circuited. When the solid electrolyte layer has a thickness of less than or equal to 100 µm, the battery can operate at high output power.

The shape of the solid electrolyte contained in electrolyte layer 102 is not particularly limited. When the solid electrolyte is a powder material, the shape thereof may be, for example, a needle shape, a spherical shape, an elliptical spherical shape, or the like. The shape of the solid electrolyte may be particulate, for example.

For example, when the shape of the solid electrolyte is particulate (for example, spherical), the median diameter of the solid electrolyte may be less than or equal to 100 µm, or less than or equal to 10 µm.

In the present disclosure, the "median diameter" means a particle size at which the cumulative volume in the volume-based particle size distribution is equal to 50%. The volume-based particle size distribution is measured by, for example, a laser diffraction apparatus or an image analysis apparatus.

The solid electrolyte contained in electrolyte layer 102 can be produced by the following method.

A raw material powder is prepared so as to have an intended composition. Examples of the raw material powder include oxides, hydroxides, halides, or acid halides.

As an example, when the intended composition is Li₃YBr₄Cl₂, LiBr, YCl, and YBr are mixed in a molar ratio of about 3 : 0.66 : 0.33. The raw material powders may be mixed in a molar ratio previously adjusted so as to offset possible compositional changes in the synthesis process.

The raw material powders are mechanically (that is, using a mechanochemical milling method,) reacted with each other in a mixing apparatus such as a planetary ball mill to obtain a reactant. The reactant may be sintered in vacuum or in an inert atmosphere. Alternatively, a mixture of the raw material powders may be sintered in vacuum or in an inert atmosphere to obtain a reactant. The sintering is desirably performed, for example, at a temperature of from 100°C to 300°C inclusive for 1 hour or longer. In order to suppress a compositional change during the sintering, the raw material powders are desirably fired in a sealed container such as a quartz tube.

By these methods, a solid electrolyte used for electrolyte layer 102 is obtained.

Fig. 4 is a cross-sectional view schematically illustrating a modified example of the battery according to the exemplary embodiment of the present disclosure. When the electrolyte material constituting electrolyte layer 102 is an electrolytic solution, the battery according to the exemplary embodiment of the present disclosure may be, for example, battery 2000 having a configuration as illustrated in Fig. 4. In Fig. 4, members having the same functions as those of the members illustrated in Fig. 1 are denoted by the same reference numerals. Battery 2000 includes first electrode 101, second electrode 103, electrolytic solution 201, separator 202, and exterior 203. Separator 202 is disposed between first electrode 101 and second electrode 103. First electrode 101 and second electrode 103 face each other with separator 202 interposed therebetween. First electrode 101, second electrode 103, separator 202, and electrolytic solution 201 are housed in exterior 203. Electrolytic solution 201 is, for example, an electrolytic solution with which first electrode 101, second electrode 103, and separator 202 are impregnated. As described above, in battery 2000 having a configuration in which the electrolytic solution is used as the electrolyte, electrolytic solution 201 with which separator 202 is impregnated is located between first electrode 101 and second electrode 103. That is, electrolytic solution 201 with which separator 202 is impregnated as described above serves as an electrolyte layer. Electrolytic solution 201 may be filled in the internal space of exterior 203.

Electrolytic solution 201 contains, for example, a non-aqueous solvent and a lithium salt.

Examples of the non-aqueous solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvent include ethylene carbonate, propylene carbonate, butylene carbonate, and vinylene carbonate. Examples of the chain carbonate ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Example of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. One type of non-aqueous solvent selected from these solvents may be used singly. Alternatively, a mixture of two or more types of non-aqueous solvents selected from these solvents may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these may be used singly. Alternatively, a mixture of two or more types of lithium salts selected from these may be used.

Separator 202 has lithium ion conductivity. The material of separator 202 is not particularly limited as long as lithium ions are allowed to pass through the material. The material of separator 202 may be at least one selected from the group consisting of solid electrolytes, gel electrolytes, ion exchange resin membranes such as a lithium cation exchange resin, semipermeable membranes, and porous membranes. When separator 202 is made of these materials, the safety of battery 2000 can be sufficiently ensured. Examples of the solid electrolyte include sulfide solid electrolytes such as Li₂S-P₂S₅, and oxide solid electrolytes such as Li₇La₃Zr₂O₁₂ (LLZ). Examples of the gel electrolyte include gel electrolytes containing a fluororesin such as PVdF. Examples of the ion exchange resin membrane include cation exchange membranes and anion exchange membranes. Examples of the porous membrane include a porous membrane made of a polyolefin resin and a porous membrane made of glass paper obtained by weaving glass fibers into a nonwoven fabric.

Exterior 203 is made of, for example, a material obtained by laminating a metal foil such as an aluminum foil with a resin film such as a polyethylene terephthalate (PET) film. Exterior 203 may be a container made of resin or metal.

### [Second electrode]

Second electrode 103 functions as a positive electrode. Second electrode 103 contains a material capable of occluding and releasing metal ions such as lithium ions. The material is, for example, a positive electrode active material.

Second electrode 103 may include current collector 105 and active material layer 106. Active material layer 106 contains a positive electrode active material. Active material layer 106 is disposed, for example, between current collector 105 and electrolyte layer 102.

Active material layer 106 may be disposed on the surface of current collector 105 in direct contact with current collector 105.

As the positive electrode active material, for example, a lithium-containing transition metal oxide, a transition metal fluoride, a polyanion material, a fluorinated polyanion material, a transition metal sulfide, a transition metal oxysulfide, a transition metal oxynitride, and the like can be used. Examples of the lithium-containing transition metal oxide include LiNi_{1-x-y}CoₓAl_{y}O₂((x + y) < 1), LiNi_{1-x-y}CoₓMn_{y}O₂((x + y) < 1), and LiCoO₂. In particular, when the lithium-containing transition metal oxide is used as the positive electrode active material, the production cost of the electrode can be reduced, and the average discharge voltage of the battery can be increased. The positive electrode active material may contain, for example, Li(Ni,Co,Mn)O₂.

Examples of the material of current collector 105 include metal materials. Examples of the metal material include copper, stainless steel, iron, and aluminum.

Second electrode 103 may contain a solid electrolyte. As the solid electrolyte, the solid electrolytes exemplified as the electrolyte material constituting electrolyte layer 102 may be used.

The positive electrode active material may have a median diameter of from 0.1 µm to 100 µm inclusive. When the positive electrode active material has a median diameter of more than or equal to 0.1 µm, the positive electrode active material and the solid electrolyte can form a good dispersion state. This improves the charge-discharge characteristics of the battery. When the positive electrode active material has a median diameter of less than or equal to 100 µm, the lithium diffusion rate is improved. This allows the battery to operate at high output power.

The positive electrode active material may have a median diameter larger than the solid electrolyte. Thereby, the positive electrode active material and the solid electrolyte can form a good dispersion state.

From the viewpoint of the energy density and output of the battery, in second electrode 103, the ratio of the volume of the positive electrode active material to the total volume of the positive electrode active material and the solid electrolyte may be from 0.30 to 0.95 inclusive.

In order to prevent the solid electrolyte from reacting with the positive electrode active material, a coating layer may be formed on the surface of the positive electrode active material. This makes it possible to suppress an increase in reaction overvoltage of the battery. Examples of the coating material contained in the coating layer include sulfide solid electrolytes, oxide solid electrolytes, and halide solid electrolytes.

The thickness of second electrode 103 may be from 10 µm to 500 µm inclusive. When the thickness of second electrode 103 is more than or equal to 10 µm, a sufficient energy density of the battery can be ensured. When the thickness of second electrode 103 is less than or equal to 500 µm, the battery can operate at high output power.

Second electrode 103 may contain a conductive material for the purpose of enhancing electron conductivity.

Second electrode 103 may contain a binder.

As the conductive material and the binder, the same materials as the materials that can be used for active material layer 104 may be used.

Second electrode 103 may contain a non-aqueous electrolytic solution, a gel electrolyte, or an ionic liquid for the purpose of facilitating transfer of lithium ions and improving the output characteristics of the battery.

The non-aqueous electrolytic solution contains a non-aqueous solvent, and a lithium salt dissolved in the non-aqueous solvent. Examples of the non-aqueous solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvent include ethylene carbonate, propylene carbonate, and butylene carbonate. Examples of the chain carbonate ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Example of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. One type of non-aqueous solvent selected from these solvents may be used singly. Alternatively, a mixture of two or more types of non-aqueous solvents selected from these solvents may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One type of lithium salt selected from these may be used singly. Alternatively, a mixture of two or more types of lithium salts selected from these may be used. The concentration of the lithium salt ranges, for example, from 0.5 mol/liter to 2 mol/liter inclusive.

As the gel electrolyte, a polymer material impregnated with a non-aqueous electrolytic solution can be used. Examples of the polymer material include polyethylene oxide, polyacrylonitrile, polyvinylidene fluoride, polymethyl methacrylate, and polymers having an ethylene oxide bond.

Examples of the cation contained in the ionic liquid include:
(i) aliphatic chain quaternary salts such as tetraalkylammonium and tetraalkylphosphonium;
(ii) aliphatic cyclic ammoniums such as a pyrrolidinium, a morpholinium, an imidazolinium, a tetrahydropyrimidinium, piperazinium, and a piperidinium; and
(iii) nitrogen-containing heterocyclic aromatic cations such as a pyridinium and an imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻; and C(SO₂CF₃)₃⁻.

The ionic liquid may contain a lithium salt.

In the above description, the configuration example in which first electrode 101 is a negative electrode and second electrode 103 is a positive electrode has been described. However, first electrode 101 may be a positive electrode and second electrode 103 may be a negative electrode.

When first electrode 101 is a positive electrode and second electrode 103 is a negative electrode, active material layer 104 is a positive electrode active material layer. That is, Bi contained in active material layer 104 functions as a positive electrode active material. In this case, second electrode 103 as a negative electrode contains, for example, lithium metal.

Battery 1000 has a basic configuration including first electrode 101, electrolyte layer 102, and second electrode 103, and is sealed in a sealed container to prevent air and moisture from entering therein. Examples of the shape of battery 1000 include a coin shape, a cylindrical shape, a square shape, a sheet shape, a button shape, a flat shape, and a laminated shape.

### EXAMPLES

Hereinafter, the details of the present disclosure will be disclosed using examples and reference examples. The following examples are illustrative, and the present disclosure is not limited to only the following examples.

### (Example 1)

### <Preparation of first electrode>

As a pretreatment, a copper foil (10 cm × 10 cm, thickness: 12 µm) was preliminarily degreased with an organic solvent, and then one surface of the foil was masked. The foil was immersed in an acidic solvent to perform degreasing, thereby activating the surface of the copper foil. Bismuth methanesulfonate as a soluble bismuth salt was added to 1.0 mol/L methanesulfonic acid so that the concentration of Bi³⁺ ions was 0.18 mol/L to prepare a plating bath. The activated copper foil was connected to a power source so that a current could be applied thereto, and then immersed in the plating bath. Thereafter, the unmasked part of the copper foil surface was electroplated with Bi so as to have a thickness of about 1 µm by controlling the current density to 2 A/dm². After electroplating, the copper foil was recovered from the acidic bath, and the masking was removed from the copper foil. Then, the copper foil was washed with pure water, dried, and punched into a size of 2 cm × 2 cm to obtain a first electrode. That is, the first electrode of Example 1 had a configuration in which an active material layer formed of a Bi plating layer was provided on a current collector made of a copper foil. In the first electrode of Example 1, the density of the active material contained in the active material layer formed of a Bi plating layer was determined from the graph of Fig. 2, and was 7.5 g/cm³. In addition, the X-ray diffraction pattern obtained by surface X-ray diffraction measurement of the active material layer formed of a Bi plating layer is shown in Fig. 3, and the peak intensity ratio I(2)/I(1) is shown in Table 1. In the active material layer of the battery according to Example 1, the peak intensity ratio I(2)/I(1) was more than or equal to 0.29.

### <Preparation of test cell>

The first electrode was used as a working electrode. As a counter electrode, Li metal having a thickness of 0.34 mm was used. The working electrode corresponds to a negative electrode of a secondary battery. The Li metal was doubly coated with a microporous separator (Celgard 3401, Asahi Kasei Corporation). As an electrolytic solution, a solution in which LiPF₆ was dissolved in vinylene carbonate (VC) at a concentration of 1.0 mol/L was prepared. A battery as a test cell was assembled using such a working electrode, a counter electrode, and an electrolytic solution. The test cell thus prepared is a monopolar test cell including a working electrode and a counter electrode, and is used to test the performance of one of electrodes in a secondary battery. Specifically, an electrode to be tested is used as the working electrode, and an appropriate active material in a sufficient amount to cover the reaction of the working electrode is used as the counter electrode. Since this test cell was used to test the performance of the first electrode as a negative electrode, a large excess of Li metal was used as the counter electrode as is usually used. The negative electrode, the performance of which has been tested using such a test cell, can be used as a secondary battery, for example, by being combined with a positive electrode containing a positive electrode active material as described in the above exemplary embodiment, for example, a transition metal oxide containing Li.

### <Charge-discharge test>

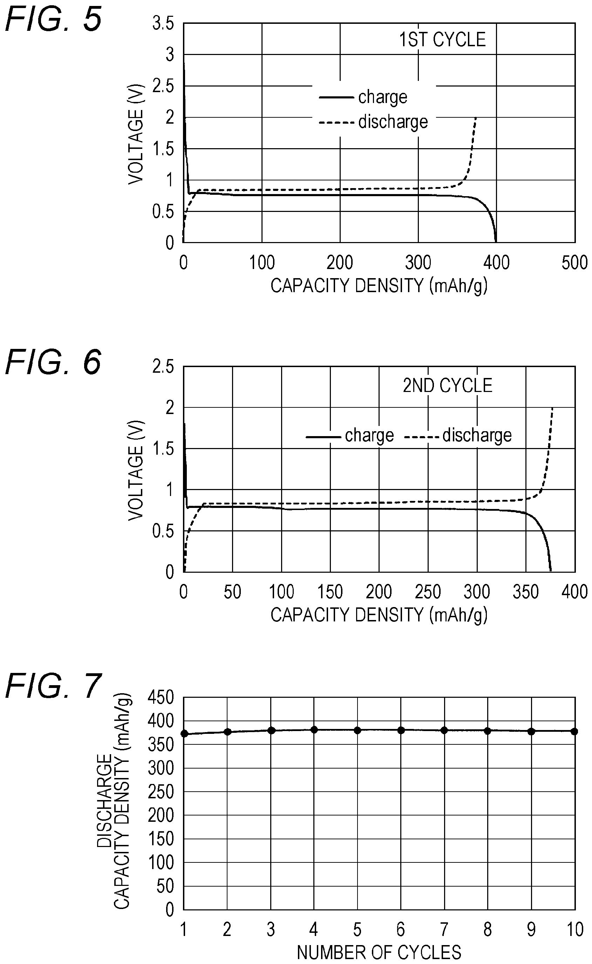

A charge-discharge test was performed on the test cell. At a constant current value of 0.6 mA (0.15 mA/cm²), the test cell was charged up to 0 V, and discharged up to 2 V. This was defined as one cycle. A constant current value of 0.6 mA (0.15 mA/cm²) corresponds to 0.5 IT. The charge-discharge test was performed at 25°C. Fig. 5 is a graph showing a result of an initial charge-discharge test of a battery according to Example 1. Fig. 6 is a graph showing a result of a charge-discharge test of the battery according to Example 1 at the second cycle. As can be seen from the results shown in Figs. 5 and 6, the battery according to Example 1 was very excellent in discharge flatness.

### <Charge-discharge cycle test>

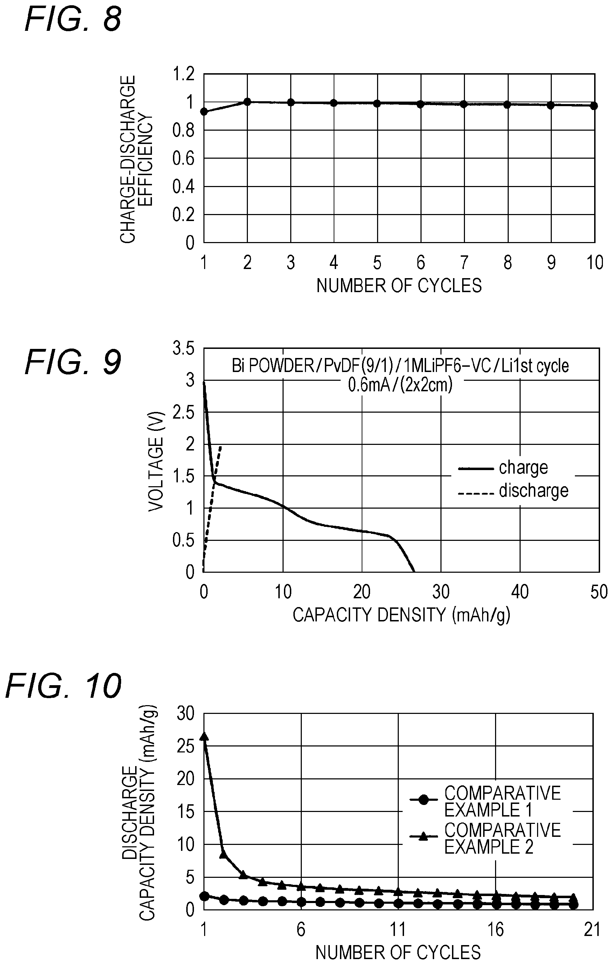

Under the same conditions as those in the charge-discharge test, a charge-discharge cycle test was repeated up to 10 cycles with charging and discharging as one cycle, and cycle characteristics were evaluated. Fig. 7 is a graph showing a relationship between the number of cycles and the discharge capacity density of the battery according to Example 1. Fig. 8 is a graph showing a relationship between the number of cycles and the charge-discharge efficiency of the battery according to Example 1. As shown in Fig. 8, the battery according to Example 1 had high initial (at the first cycle) charge-discharge efficiency, and the charge-discharge efficiency after the second cycle was almost 100%.

### (Comparative Example 1)

### <Preparation of first electrode>

A Bi powder (fine powder, purity: 3N, particle size: about 1 to 2 µm, manufactured by Kojundo Chemical Lab. Co., Ltd.) was used as an active material, and PVdF was used as a binder. The Bi powder and PVdF were dispersed in N-methyl-2-pyrrolidone (NMP) to prepare a slurry. In this slurry, the mass ratio of Bi to PVdF was 9 : 1 (Bi : PVdF). This slurry was applied onto a copper foil having a thickness of 12 µm, and the foil was then formed into a size of 2 × 2 cm to prepare a first electrode. In the first electrode of Comparative Example 1, the density of the active material prepared using the Bi powder and PVdF was determined from the mass, area, and thickness of the active material layer. As a result, the density of the active material of Comparative Example 1 was 4.3 g/cm³. The surface X-ray diffraction measurement of the active material layer of Comparative Example 1 was performed by the same method as in Example 1, that is, by the θ-2θ method using Cu-Kα rays having wavelengths of 1.5405 Å and 1.5444 Å as X-rays from the thickness direction of the active material layer, using an X-ray diffractometer (MiNi Flex, manufactured by Rigaku Corporation). The peak intensity ratio I(2)/I(1) was determined using the obtained X-ray diffraction pattern, and consequently was less than 0.29.

### <Preparation of test cell>

A test cell was assembled in the same manner as in Example 1 except that the first electrode prepared in Comparative Example 1 was used.

### <Charge-discharge test>

A charge-discharge test was performed on the test cell. At a constant current value of 0.6 mA (0.15 mA/cm²), the test cell was charged up to 0 V, and discharged up to 2 V. This was defined as one cycle. A constant current value of 0.6 mA (0.15 mA/cm²) corresponds to 0.5 IT. The charge-discharge test was performed at 25°C. Fig. 9 is a graph showing a result of an initial charge-discharge test of a battery according to Comparative Example 1. As can be seen from the results shown in Fig. 9, the battery according to Comparative Example 1 in which the Bi powder was used for the active material layer had very poor initial charge-discharge characteristics.

### <Charge-discharge cycle test>

Under the same conditions as those in the charge-discharge test, a charge-discharge cycle test was repeated up to 20 cycles with charging and discharging as one cycle, and cycle characteristics were evaluated. Fig. 10 is a graph showing a relationship between the number of cycles and the discharge capacity density of batteries according to Comparative Examples 1 and 2. As can be seen from the results shown in Fig. 10, the battery according to Comparative Example 1 in which the Bi powder was used for the active material layer had very poor cycle characteristics.

### (Comparative Example 2)

### <Preparation of first electrode>

A Bi powder (fine powder, purity: 3N, particle size: about 1 to 2 µm, manufactured by Kojundo Chemical Lab. Co., Ltd.) was used as an active material, acetylene black (AB) ("DENKA BLACK", manufactured by Denka Company Limited) was used as a conductive material, and PVdF was used as a binder. The Bi powder, AB, and PVdF were dispersed in NMP to prepare a slurry. In this slurry, the mass ratio of Bi, AB, and PVdF was 8 : 1 : 1 (Bi : AB : PVdF). This slurry was applied onto a copper foil having a thickness of 12 µm, and the foil was then formed into a size of 2 × 2 cm to prepare a first electrode. In the first electrode of Comparative Example 2, the density of the active material prepared using the Bi powder, AB, and PVdF was determined from the mass, area, and thickness of the active material layer. As a result, the density of the active material of Comparative Example 2 was 4.0 g/cm³. The surface X-ray diffraction measurement of the active material layer of Comparative Example 2 was performed by the same method as in Example 1, that is, by the θ-2θ method using Cu-Kα rays having wavelengths of 1.5405 Å and 1.5444 Å as X-rays from the thickness direction of the active material layer, using an X-ray diffractometer (MiNi Flex, manufactured by Rigaku Corporation). The peak intensity ratio I(2)/I(1) was determined using the obtained X-ray diffraction pattern, and consequently was less than 0.29.

### <Preparation of test cell>

A test cell was assembled in the same manner as in Example 1 except that the first electrode prepared in Comparative Example 2 was used.

### <Charge-discharge test>

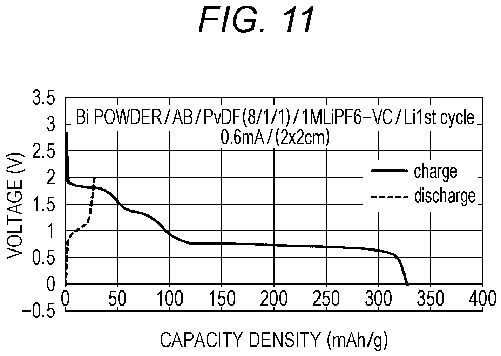

A charge-discharge test was performed on the test cell. At a constant current value of 0.6 mA (0.15 mA/cm²), the test cell was charged up to 0 V, and discharged up to 2 V. This was defined as one cycle. A constant current value of 0.6 mA (0.15 mA/cm²) corresponds to 0.5 IT. The charge-discharge test was performed at 25°C. Fig. 11 is a graph showing a result of an initial charge-discharge test of a battery according to Comparative Example 2. As can be seen from the results shown in Fig. 11, the battery according to Comparative Example 2 in which the Bi powder was used for the active material layer had very poor initial charge-discharge characteristics.

### <Charge-discharge cycle test>

Under the same conditions as those in the charge-discharge test, a charge-discharge cycle test was repeated up to 10 cycles with charging and discharging as one cycle, and cycle characteristics were evaluated. Fig. 10 is a graph showing a relationship between the number of cycles and the discharge capacity density of batteries according to Comparative Examples 1 and 2. As can be seen from the results shown in Fig. 10, the battery according to Comparative Example 2 in which the Bi powder was used for the active material layer had very poor cycle characteristics.

The above results of Example 1, Comparative Example 1, and Comparative Example 2 show that a battery including an electrode having an active material layer in which m of the active material is Bi and the density of the active material is from 6.0 g/cm³ to 9.8 g/cm³ inclusive can have good cycle characteristics.

### INDUSTRIAL APPLICABILITY

The battery of the present disclosure is used as, for example, a lithium secondary battery.

### REFERENCE MARKS IN THE DRAWINGS

- 1000, 2000: battery
- 100: current collector
- 101: first electrode
- 102: electrolyte layer
- 103: second electrode
- 104: active material layer
- 105: current collector
- 106: active material layer
- 201: electrolytic solution
- 202: separator
- 203: exterior

## Claims

1. A battery comprising:
a first electrode;
a second electrode; and
an electrolyte layer located between the first electrode and the second electrode,
wherein
the first electrode comprises a current collector, and an active material layer located between the current collector and the electrolyte layer,
the active material layer contains Bi as a main component of an active material, and
the active material has a density of from 6.0 g/cm³ to 9.8 g/cm³, inclusive, and
wherein when the first electrode is a negative electrode, the density of the active material is a density of the active material of the battery in a fully discharged state, and when the first electrode is a positive electrode, the density of the active material is a density of the active material of the battery in a fully charged state.

2. The battery according to Claim 1, wherein the density of the active material is from 7.5 g/cm³ to 9.8 g/cm³, inclusive.

3. The battery according to Claim 1 or 2, wherein, in an X-ray diffraction pattern of the active material layer, the X-ray diffraction pattern of the active material layer being obtained by surface X-ray diffraction measurement using a Cu-Kα ray, an intensity ratio I(2)/I(1) of an intensity I(2) to an intensity I(1) is more than or equal to 0.29, where the intensity I(1) is a height intensity of a maximum peak present in a range of a diffraction angle 2θ of from 26° to 28°, inclusive, and the intensity I(2) is a height intensity of a maximum peak present in a range of a diffraction angle 2θ of from 37° to 39°, inclusive.

4. The battery according to Claim 3, wherein the intensity ratio I(2)/I(1) is less than or equal to 0.57.

5. The battery according to any one of Claims 1 to 4, wherein the active material layer contains a Bi simple substance.

6. The battery according to any one of Claims 1 to 5, wherein the active material layer contains at least one selected from the group consisting of LiBi and Li₃Bi.

7. The battery according to any one of Claims 1 to 6, wherein the active material layer contains only a Bi simple substance as an active material.

8. The battery according to any one of Claims 1 to 7, wherein the active material layer contains no electrolyte.

9. The battery according to any one of Claims 1 to 8, wherein the current collector contains Cu.

10. The battery according to any one of Claims 1 to 9, wherein the active material layer is a plating layer.

11. The battery according to any one of Claims 1 to 10, wherein
the first electrode is a negative electrode, and
the second electrode is a positive electrode.
